# EUROPÄISCHE PATENTANMELDUNG

(11) **EP 3 165 478 A1**
(43) Veröffentlichungstag der Anmeldung: **10.05.2017**
(21) Anmeldenummer: 16196896.1
(22) Anmeldetag: 02.11.2016
(51) Int. Cl.: B65D 85/46, B65G 49/06, B65D 85/48, E04G 21/16

(54) **LAGERVORRICHTUNG FÜR EINEN PLATTENFÖRMIGEN GEGENSTAND IN MODULBAUWEISE**

(30) Priorität: 06.11.2015 CH 16122015
(71) Anmelder: ERNE AG Holzbau, 5080 Laufenburg (CH)
(72) Erfinder: Wehrle, Thomas, 5080 Laufenburg (CH); Muff, Markus, 5080 Laufenburg (CH)
(74) Vertreter: Herrmann, Johanna

(57) **Zusammenfassung**

Eine Lagervorrichtung (1) für grossflächige plattenförmige Gegenstände, insbesondere Wandelemente, umfasst ein Basiselement (2), ein Trägerelement (3, 4). Das Trägerelement weist ein erstes unteres Trägerelementende (30, 40) und ein zweites unteres Trägerelementende (31, 41) auf. Ein Zwischenboden (9) ist oberhalb des ersten und zweiten unteren Trägerelementendes angeordnet, wobei sich oberhalb des Zwischenbodens ein oberer Trägerelementabschnitt (13, 14) des Trägerelements (3, 4) erstreckt. Vom oberen Trägerelementabschnitt und dem Zwischenboden (9) ist ein begehbarer Gang ausgebildet. Das erste und zweite untere Trägerelementende (30, 31, 40, 41) ist als Teilelement einer Steckverbindung ausgebildet, welche als eine lösbare Verbindung mit dem Basiselement (3) verbindbar ist.

## Beschreibung

Die vorliegende Anmeldung bezieht sich auf eine Lagervorrichtung, welche zum Lagern und Transport von grossflächigen Gegenständen eingesetzt werden kann, welche in Modulbauweise ausgeführt ist. Insbesondere handelt es sich um einen Lagerbock und/oder Transportbock für die Lagerung und den Transport grossflächiger Gegenstände, wie beispielsweise Wände.

Verschiedene Transportböcke für den Transport grossflächiger Gegenstände sind bereits vorgeschlagen worden, insbesondere für Glasplatten, siehe beispielsweise die US7264126 B1. Ein derartiger Transportbock besteht üblicherweise aus einer Basis und einer Gerüstkonstruktion. Die Gerüstkonstruktion dient als Auflage für den Gegenstand. Wie in der US7264126 B1 gezeigt ist, hat die Gerüstkonstruktion einen A-förmigen Querschnitt und bildet in Bezug auf die Basis ein dreieckförmiges Prisma aus. Die Länge des Prismas entspricht dabei im Wesentlichen der Länge des Gegenstandes. Diese Gerüstkonstruktion wird für Glasplatten verwendet, die auf diese Weise kippsicher gelagert werden können, was für den Transport von Wichtigkeit ist. Insbesondere verbleiben die schweren Glasplatten in ihrer geneigten Position, auch wenn das Transportfahrzeug eine kurvenreiche Strecke befahren muss. Ein Nachteil dieser Gerüstkonstruktion liegt darin begründet, dass sie im leeren Zustand einen nicht unbeträchtlichen Platzbedarf aufweist.

Für den Transport von plattenförmigen, grossflächigen Gegenständen, wie Wandteilen ist es auch bekannt, eine Gerüstkonstruktion einzusetzen, die sich in vertikaler Richtung von einer horizontalen Basis aus erstreckt, in Fachkreisen auch als T-Transportbock bezeichnet. Der T-Transportbock hat gegenüber dem A-Transportbock den Vorteil, dass der Platzbedarf für die Ladung verringert ist. Dementsprechend ist auch der Platzbedarf für die Lagerung der leeren Gerüstkonstruktion verringert. Allerdings gestaltet sich die Transportsicherung aufwändiger. Insbesondere bei Gegenständen, die eine Höhe von mehr als 1 m aufweisen, muss die Transportsicherung gewährleisten, dass ein Kippen der Ladung auch bei unerwarteten Bremsvorgängen oder Kurvenfahrten ausgeschlossen werden kann. Daher muss die Transportsicherung nicht nur ein entlang der Seiten verlaufendes Transportband oder ähnliches umfassen, sondern auch eine Transportsicherung für die obere Kante. Die plattenförmigen, grossflächigen Gegenstände können in unterschiedlichen Neigungswinkeln und/oder in unterschiedlicher Anzahl auf jedem der Schenkel des A-Transportbocks angestellt werden. Hierzu ist eine Mehrzahl von Stahlrohrhaltern vorgesehen, in welche Sicherungs- oder Haltestangen eingesteckt werden können, an welchen ein Transportband oder eine andere Transportsicherung angebracht werden kann. Bei Gegenständen, für die aufgrund ihrer Höhe eine Transportsicherung erforderlich ist, müssen Sicherheitsvorkehrungen für die Personen getroffen werden, die eine derartige Transportsicherung anbringen oder abnehmen müssen. Hierzu ist gemäss EP 2 832 664 A1 vorgeschlagen worden, die Gerüstkonstruktion derart zu gestalten, dass ein Gang für die Personen geschaffen wird, die mit den Ladungselementen in grosser Höhe hantieren müssen, insbesondere Transportsicherungen anbringen oder lösen müssen. Allerdings besteht auch gemäss dieser Lösung der Nachteil, dass ein nicht unbeträchtlicher Platzbedarf für die Gerüstkonstruktion gegeben ist, wenn sie gerade nicht benötigt wird, das heisst, ein entsprechender Lagerraum ist vorzusehen, insbesondere wenn mehrere derartige Lagervorrichtungen benötigt werden. Daher besteht ein Bedarf für Gerüstkonstruktionen, die einen verringerten Lagerraum benötigen, bzw. die zumindest teilweise in einfacher Weise montierbar oder demontierbar sind.

Aufgabe der Erfindung ist es daher, eine Lagervorrichtung zu schaffen, die einen geringeren Lagerraum beansprucht, wenn sie nicht in Gebrauch ist. Eine weitere Aufgabe der Erfindung ist es, eine Lagervorrichtung bereitzustellen, die sowohl für den Transport, als auch für die Lagerung von Plattenelementen verwendet werden kann. Insbesondere ist die Lagervorrichtung für Plattenelemente mit einer Länge von bis zu 10 m und/oder einer Höhe von über 2 m geeignet. Insbesondere ist es Aufgabe der Erfindung, eine Lagervorrichtung zu schaffen, die an Plattenelemente unterschiedlicher Abmessungen angepasst werden kann, das heisst, deren Höhe oder Querabmessung in Abhängigkeit von der Abmessung der Plattenelemente angepasst werden kann.

Diese Aufgabe wird mittels einer Lagervorrichtung nach Anspruch 1 gelöst. Die Unteransprüche 2 bis 10 betreffen vorteilhafte Ausgestaltungen der Lagervorrichtung. Ansprüche 11 bis 13 betreffen ein Verfahren zur Herstellung und/oder Verwendung einer Lagervorrichtung nach einem der Ausführungsbeispiele.

Wenn der Begriff "beispielsweise" in der nachfolgenden Beschreibung verwendet wird, bezieht sich dieser Begriff auf Ausführungsbeispiele und/oder Ausführungsformen, was nicht notwendigerweise als eine bevorzugtere Anwendung der Lehre der Erfindung zu verstehen ist. In ähnlicher Weise sind die Begriffe "vorzugsweise", "bevorzugt" zu verstehen, indem sie sich auf ein Beispiel aus einer Menge von Ausführungsbeispielen und/oder Ausführungsformen beziehen, was nicht notwendigerweise als eine bevorzugte Anwendung der Lehre der Erfindung zu verstehen ist. Dementsprechend können sich die Begriffe "beispielsweise", "vorzugsweise" oder "bevorzugt" auf eine Mehrzahl von Ausführungsbeispielen und/oder Ausführungsformen beziehen.

Die Lösung der Aufgabe erfordert es, eine Lagervorrichtung für die Lagerung und/oder den Transport von grossflächigen Gegenständen, wie Plattenelementen, bereitzustellen, die einfach montiert und demontiert und/oder in der Höhe verstellt werden kann und/oder dessen Querabmessung verändert werden kann. Die Lagervorrichtung für grossflächige plattenförmige Gegenstände, insbesondere Wandelemente, umfasst ein Basiselement und ein Trägerelement. Das Trägerelement weist ein erstes unteres Trägerelementende und ein zweites unteres Trägerelementende auf. Ein Zwischenboden ist oberhalb des ersten und zweiten unteren Trägerelementendes angeordnet. Oberhalb des Zwischenbodens erstreckt sich ein oberer Trägerelementabschnitt des Trägerelements. Vom oberen Trägerelementabschnitt und dem Zwischenboden ist ein begehbarer Gang ausgebildet. Zumindest eines der ersten und zweiten unteren Trägerelementenden ist als Teilelement einer Steckverbindung ausgebildet, welches eine lösbare Verbindung mit dem Basiselement ausbilden kann.

Eine Lagervorrichtung für grossflächige plattenförmige Gegenstände, insbesondere Wandelemente nach einem Ausführungsbeispiel umfasst ein Basiselement, ein erstes Trägerelement und zweites Trägerelement. Das erste Trägerelement und das zweite Trägerelement erstrecken sich insbesondere vom Basiselement aus in eine Höhendimension, bevorzugt in vertikaler Richtung. Das Basiselement kann derart ausgebildet sein, dass es eine Bodenfläche ausbildet oder einschliesst. Das erste Trägerelement weist ein erstes und ein zweites unteres Trägerelementende und das zweite Trägerelement ein erstes und ein zweites unteres Trägerelementende auf. Zwischen dem oberen Trägerelementende und dem unteren Trägerelementende des ersten Trägerelements und zwischen dem oberen Trägerelementende und dem unteren Trägerelementende des zweiten Trägerelements ist ein Stützelement angeordnet. Zwischen den oberen Trägerelementenden und dem Stützelement erstreckt sich ein oberer Trägerelementabschnitt, wobei von den oberen Trägerelementabschnitten und dem Stützelement ein Gang ausgebildet ist. Jedes der ersten und zweiten Trägerelemente weist somit einen oberen Trägerelementabschnitt auf, der über das Stützelement hinausragt, sodass der begehbare Gang zwischen den oberen Trägerelementabschnitten und dem Stützelement ausgebildet ist. Das Basiselement ist insbesondere derart ausgebildet, dass es eine Bodenfläche ausbildet oder einschliesst. Insbesondere kann das untere Trägerelementende ein Steckelement umfassen, welches in einer Ausnehmung oder einem Vorsprung des Basiselements aufnehmbar ist. Das Basiselement kann ein Steckelement aufweisen, welches in eine korrespondierende Ausnehmung des unteren Trägerelementendes einsteckbar oder auf das untere Trägerelementende aufsteckbar ist.

Das erste Trägerelement kann ein erstes und ein zweites Profilelement enthalten, sowie zumindest ein Verbindungselement, welches eine Verbindung zwischen dem ersten und zweiten Profilelement ausbildet. Das zweite Trägerelement kann zumindest ein erstes und ein zweites Profilelement enthalten, sowie zumindest ein Verbindungselement, welches eine Verbindung zwischen dem ersten und zweiten Profilelement ausbildet. Zumindest eines der Profilelemente kann höhenverstellbar sein. Zumindest eines der Profilelemente kann eine Mehrzahl von Profilteilelementen umfassen. Zumindest eines der Verbindungselemente kann längsverstellbar sein. Zumindest eines der Verbindungselemente kann eine Mehrzahl von Verbindungsteilelementen enthalten.

Über den begehbaren Gang erhält der Mitarbeiter, der für die Sicherung der Ladung zuständig ist, Zugang zu dem Lastelement und kann Transportsicherungsmittel ohne Absturzgefahr anbringen oder lösen. Durch den begehbaren Gang wird eine Lauffläche ausgebildet. Daher benötigt der Mitarbeiter keine Sicherungsmittel, insbesondere keine Seilsicherung. Zudem kann sich der Mitarbeiter durch den Wegfall der Sicherung freier bewegen und die Sicherung der Lastelemente präziser und schneller durchführen. Ein Trägerelementabschnitt sowie ein Geländer können auch zur Lagerung und Sicherung der Lastelemente verwendet werden. Daher ermöglicht die Lagervorrichtung auch den Transport und die Lagerung von unterschiedlichen plattenförmigen Gegenständen. Diese plattenförmigen Gegenstände können unterschiedliche Abmessungen aufweisen, können mehrteilig ausgebildet sein und Ausnehmungen oder Hohlräume enthalten. Beispielsweise können Wandelemente mit Ausnehmungen für Fenster oder Türen gemeinsam mit Wandelementen gestapelt werden, die keine derartigen Ausnehmungen aufweisen.

Diese Variante ist als eine Leichtbaukonstruktion ausgeführt und ermöglicht die Einsparung von Konstruktionsmaterialien. Zudem können die Profilelemente auch dazu dienen, Sicherungsmittel aufzunehmen. Wenn ein Trägerelement aus einer Mehrzahl von Profilteilelementen besteht, können auch Zwischensicherungen angebracht werden. Diese Massnahme kann sinnvoll sein, wenn Lastelemente unterschiedlicher Abmessungen nebeneinander oder hintereinander gestapelt werden sollen. Die Profilteilelemente können durch eine modulare Bauweise gekennzeichnet sein.

Das Verbindungselement kann als Auflager für den Zwischenboden dienen, welcher sich zwischen Stützelementen erstreckt. Die Stützelemente verbinden nach einem Ausführungsbeispiel das erste Trägerelement mit dem zweiten Trägerelement. Nach einem Ausführungsbeispiel verbinden die Stützelemente die beiden oberen Trägerelementabschnitte der ersten und zweiten Trägerelemente. Der Zwischenboden kann auf den Stützelementen aufliegen. Der Zwischenboden kann die Stützelemente überragen. Somit hat das Verbindungselement nicht nur die Funktion, die Position der Trägerelemente zueinander festzulegen und die Rahmenkonstruktion zu stabilisieren, sondern auch eine tragende Funktion. Für die Lauffläche sind gemäss dieses Ausführungsbeispiels keine weiteren Stützträger erforderlich.

Der Winkel zwischen dem Trägerelement und dem Basiselement auf der Ladeseite beträgt mindestens 75°, vorzugsweise ungefähr 90°. Insbesondere können durch die Wahl des Winkels die plattenförmigen Gegenstände zumindest annähernd in der Position gelagert werden, die der Einbauposition entspricht. Hierdurch ist es möglich, eine maximale Anzahl Lastelemente auf der Lagervorrichtung zu lagern oder zu transportieren.

Der Winkel, den der Trägerelementabschnitt mit dem entsprechenden Verbindungselement einschliesst, beträgt nach einem Ausführungsbeispiel im Wesentlichen 90°. Der Trägerelementabschnitt enthält nach einem Ausführungsbeispiel zumindest ein Geländer. Die oberen Trägerelementabschnitte werden in dieser Anordnung als Pfosten für das Geländer verwendet. Insbesondere kann ein Profilelement als Geländerhalterung eingesetzt werden, Das Profilelement kann durch übliche Verbindungsmittel mit dem oberen Trägerelementabschnitt verbunden werden.

Nach einem Ausführungsbeispiel ist das erste Trägerelement parallel zum zweiten Trägerelement angeordnet. Diese Anordnung ist besonders platzsparend, da sich die Trägerelemente im Wesentlichen in vertikaler Richtung erstrecken. Somit kann eine maximale Anzahl an Lastelementen, die plattenförmige Gegenstände umfassen platzsparend gestapelt werden.

Nach einem Ausführungsbeispiel ist eine Aufstiegshilfe vorgesehen, die einen einfachen Zugang zum begehbaren Gang, das heisst zur Lauffläche des Zwischenbodens ermöglicht. Die Aufstiegshilfe kann eine Mehrzahl von Sprossen umfassen, die an dem Trägerelement oder an den Trägerelementen zwischen dem unteren Trägerelementende und dem Stützelement angebracht sind. Die Aufstiegshilfe kann einseitig oder an beiden Seiten der Trägerelemente angebracht werden. Insbesondere kann die Aufstiegshilfe abnehmbar sein.

Nach einem Ausführungsbeispiel ist zumindest eines der Trägerelemente schwenkbar. Insbesondere kann das Trägerelement gemeinsam mit zumindest einem Teil des Basiselements schwenkbar sein. Insbesondere, wenn das erste Trägerelement im Be- oder Entladezustand parallel zum zweiten Trägerelement angeordnet ist, kann zumindest eines der Trägerelemente um eine entlang der Bodenfläche in Richtung der Querabmessung BB des Basiselements verlaufende Schwenkachse derart geschwenkt werden, dass die oberen Enden der Trägerelemente oder die darauf angebrachten Geländer in Berührung kommen. Der Winkel, den das aus der Vertikalen verschwenkte Trägerelement mit dem Basiselement auf der Lastseite einschliesst, ist in diesem Fall grösser als 90°. Das heisst, dass das Lastelement in einem spitzen Winkel zur Bodenfläche angeordnet ist, wodurch sich die Stabilität des Lastelements gegen ein Kippen nach aussen, also vom Trägerelement weg, beträchtlich erhöht. Insbesondere kann für dieses Ausführungsbeispiel das Stützelement verkürzbar, schwenkbar oder entfernbar sein.

Das Basiselement weist nach einem Ausführungsbeispiel ein Verstellelement auf, sodass das Basiselement höhenverstellbar ist. Insbesondere kann das Verstellelement als ein Fusselement ausgebildet sein, welches ein bodenseitiges Auflageelement umfasst. Das Fusselement kann ein Steckelement, beispielsweise in der Form eines Einschubelements aufweisen, welches in einem korrespondierenden Aufnahmeelement des Basiselements aufnehmbar ist.

Vorteilhafterweise weist das Aufnahmeelement einen Querschnitt auf, der passend zum Querschnitt des Einschubelements ausgestaltet ist. Hierdurch wird eine einfache Steckverbindung erzeugt, die so lange eine sichere Auflage bietet, solange sie unter Last steht. Sobald sich die Lagervorrichtung auf dem Transportfahrzeug befindet, wirken keine Gewichtskräfte mehr auf diese Steckverbindung. Daher kann das Aufnahmeelement einfach vom Basiselement getrennt werden.

Nach einem Ausführungsbeispiel umfasst das Basiselement eine Mehrzahl von Profilelementen. Insbesondere, wenn die Lastelemente Längen von mehr als drei Metern umfassen und ein entsprechendes Eigengewicht aufweisen, ist es vorteilhaft, das Basiselement zu stabilisieren, damit es nicht zu Unebenheiten Verformungen kommt, welche zu Unebenheiten der Auflage für die Lastelemente führt. Zumindest ein Teil der Profilelemente des Basiselements kann zumindest an einem Ende als Aufnahmeelement ausgebildet sein. Insbesondere können die Profilelemente, welche das Basiselement ausbilden, als Hohlprofil ausgebildet sein, welche ein Ende des Einschubelements aufnehmen oder in einem Ende des Einschubelements aufgenommen werden können.

Ein Verfahren zur Herstellung und/oder Zusammenbau und/oder Verwendung einer Lagervorrichtung für grossflächige plattenförmige Gegenstände, insbesondere Wandelemente insbesondere nach einem der vorhergehenden Ausführungsbeispiele umfasst zumindest einen der nachfolgend beschriebenen Schritte: Zusammenbauen der Trägerelemente mit Stützelementen, Positionieren der Trägerelemente auf dem Basiselement und Einstecken von Steckelementen der Steckverbindung, wobei die Steckelemente von den Trägerelementen gebildet werden können, in die Ausnehmungen des Basiselements oder Einstecken von Steckelementen, die durch das Basiselements gebildet werden können, in die unteren Trägerelementenden, die als Ausnehmung ausgebildet sein können oder eine Ausnehmung enthalten können. Die Lagervorrichtung umfasst ein Basiselement und ein Trägerelement. Das Trägerelement weist ein erstes unteres Trägerelementende und ein zweites unteres Trägerelementende auf. Ein Zwischenboden ist oberhalb des ersten und zweiten unteren Trägerelementendes angeordnet. Oberhalb des Zwischenbodens erstreckt sich ein oberer Trägerelementabschnitt des Trägerelements. Vom oberen Trägerelementabschnitt und dem Zwischenboden ist ein begehbarer Gang ausgebildet. Zumindest eines der ersten und zweiten unteren Trägerelementenden ist als Teilelement einer Steckverbindung ausgebildet, welches eine lösbare Verbindung mit dem Basiselement ausbildet.

Nach einer Variante wird ein Lastelement mit einer Hebevorrichtung bereitgestellt. Das Lastelement wird auf der Lastseite des ersten Trägerelements positioniert, gegebenenfalls wird ein weiteres Lastelement auf der Lastseite des zweiten Trägerelements positioniert, wobei jedes der Lastelemente vom begehbaren Gang aus gesichert wird. Durch den begehbaren Gang wird eine Lauffläche für eine Person ausgebildet, welche Sicherungsmittel auf den Lastelementen anbringen kann.

Insbesondere kann eines der Trägerelemente gegen das jeweils andere Trägerelement nach der Sicherung der Lastelemente verschwenkt werden. Nach einer Variante kann vor dem Beladen der Lagervorrichtung ein Justieren der Höhe des Basiselements mittels einem Verstellelement erfolgen. Die Erfindung wird nachfolgend anhand von in den Zeichnungen dargelegten Ausführungsbeispielen näher erläutert. Diese zeigen:
Fig. 1 eine Prinzipskizze eines ersten Ausführungsbeispiels der Erfindung,
Fig. 2 eine Prinzipskizze einer ersten Variante des ersten Ausführungsbeispiels,
Fig. 3 eine Vorderansicht eines zweiten Ausführungsbeispiels der Erfindung,
Fig. 4 eine Frontansicht eines dritten Ausführungsbeispiels der Erfindung,
Fig. 5a eine Draufsicht auf ein Basiselement gemäss einer ersten Variante,
Fig. 5b eine Seitenansicht auf ein Basiselement gemäss Fig. 5a,
Fig. 5c eine Draufsicht auf ein Basiselement gemäss einer zweiten Variante,
Fig. 5d eine Seitenansicht auf ein Basiselement gemäss Fig. 5c,
Fig. 6a eine Seitenansicht einer Lagervorrichtung gemäss eines vierten Ausführungsbeispiels,
Fig. 6b eine Vorderansicht einer Lagervorrichtung gemäss Fig. 6a.

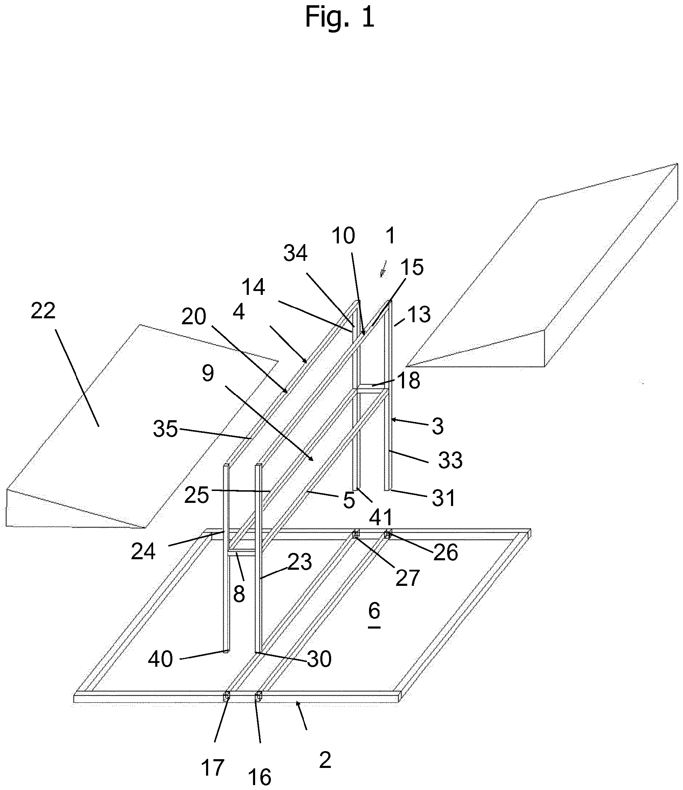

Fig. 1 zeigt ein erstes Ausführungsbeispiel der Erfindung. Die Lagervorrichtung 1 für grossflächige plattenförmige Gegenstände, insbesondere Wandelemente, umfasst ein Basiselement 2, ein erstes Trägerelement 3 und zweites Trägerelement 4. Das erste Trägerelement 3 und das zweite Trägerelement 4 erstrecken sich in eine Höhendimension. Das erste Trägerelement 3 weist ein erstes unteres Trägerelementende 30 sowie ein zweites unteres Trägerelementende 31 auf. Das zweite Trägerelement 4 weist ein erstes unteres Trägerelementende 40 sowie ein zweites unteres Trägerelementende 41 auf. Das heisst, dass die Trägerelemente 3 und 4 durch deren erste und zweite untere Trägerelementenden 30, 31, 40, 41 mit dem Basiselement 2 verbindbar sind. Diese Verbindung ist als Steckverbindung ausgestaltet, welche zur lösbaren Verbindung mit dem Basiselement 2 ausgebildet ist. Das erste Trägerelement 3 ist mit dem zweiten Trägerelement 4 über einen Zwischenboden 9 verbunden. Der Zwischenboden kann durch ein erstes Stützelement 8 sowie ein zweites Stützelement 18 unterstützt werden. Die Stützelemente 8, 18 sind derart angeordnet, dass das erste Trägerelement 3 insbesondere im Wesentlichen parallel zum zweiten Trägerelement 4 angeordnet ist. Insbesondere können sich das erste und zweite Stützelement 8, 18 in horizontaler Richtung erstrecken. Der Zwischenboden 9 und, wenn vorhanden, das erste und zweite Stützelement 8, 18 können insbesondere in einem Winkel von 90° zu der Trägerelementmittenebene verlaufen, wobei die Trägerelementmittenebene insbesondere die Mittenachsen der das Trägerelement aufspannenden Profilelemente enthält oder die Mittenebene des Wandelements, welches das Trägerelement ausbildet. Der Zwischenboden 9 erstreckt sich vom ersten Stützelement 8 zum zweiten Stützelement 18, sodass er eine Lauffläche ausbilden kann. Der Zwischenboden ist in der vorliegenden Darstellung transparent dargestellt, sodass die Stützelemente 8, 18 sowie die Verbindungselemente 5, 15 sichtbar sind, welche den Zwischenboden 9 gemäss dieses Ausführungsbeispiels tragen.

Oberhalb des Zwischenbodens 9 erstreckt sich ein oberer Trägerelementabschnitt 13 des ersten Trägerelements 3 sowie ein oberer Trägerelementabschnitt 14 des zweiten Trägerelements 4. Von den oberen Trägerelementabschnitten 13, 14 und dem Zwischenboden 9 ist ein Gang ausgebildet. Der Gang kann insbesondere eine Breite von mindestens 30 cm aufweisen. Der Gang ist gemäss diesem Ausführungsbeispiel als begehbarer Gang ausgebildet. Dieser begehbare Gang ermöglicht es dem Benutzer, das Lastelement vom Gang aus manuell für die Lagerung oder den Transport zu sichern bzw. eine derartige Transportsicherung zu überprüfen. Insbesondere können Transportsicherungsmittel, wie beispielsweise Seile, Gurten, Fixierungselemente und dergleichen auf der Oberseite des Lastelements befestigt werden. Hierdurch ist das Lastelement gegen Kippen gesichert und stabil für den Transport gelagert.

Die Trägerelemente 3, 4 können als Profilelemente, beispielsweise als Hohlprofile, C-Profile I-Profile, T-Profile, als Vollprofile, beispielsweise Balken, insbesondere Holzbalken ausgebildet sein. Die Trägerelemente 3, 4 können auch als je ein Wandelement ausgestaltet sein. Das erste Trägerelement 3 enthält ein erstes Profilelement 23, ein erstes Verbindungselement 5, ein zweites Verbindungselement 15 und ein zweites Profilelement 33, wobei das erste Verbindungselement 5 sowie das zweite Verbindungselement 15 eine Verbindung zwischen den ersten Profilelement 23 und zweiten Profilelement 33 ausbildet. Das zweite Trägerelement 4 enthält ein erstes Profilelement 24, ein erstes Verbindungselement 25, ein zweites Verbindungselement 35 und ein zweites Profilelement 34, wobei das erste Verbindungselement 25 sowie das zweite Verbindungselement 35 eine Verbindung zwischen dem ersten Profilelement 24 und dem zweiten Profilelement 34 ausbildet. Das erste Verbindungselement 5 sowie das erste Verbindungselement 25 bilden ein Auflager für den Zwischenboden 9 aus. Zusätzlich kann auch das Stützelement 8 sowie das Stützelement 18 ein Auflager für den Zwischenboden 9 ausbilden. Zumindest eines der Profilelemente 23, 33, 24, 34 kann höhenverstellbar sein. Zumindest eines der Profilelemente 23, 24, 33, 34 kann aus einer Mehrzahl von Profilteilelementen bestehen. Zumindest eines der ersten oder zweiten Verbindungselemente 5, 15, 25, 35 kann längsverstellbar sein. Zumindest eines der ersten oder zweiten Verbindungselemente 5, 15, 25, 35 kann aus einer Mehrzahl von Verbindungsteilelementen bestehen. Die zweiten Verbindungselemente 15, 35 können ein Geländer 10, 20 ausbilden.

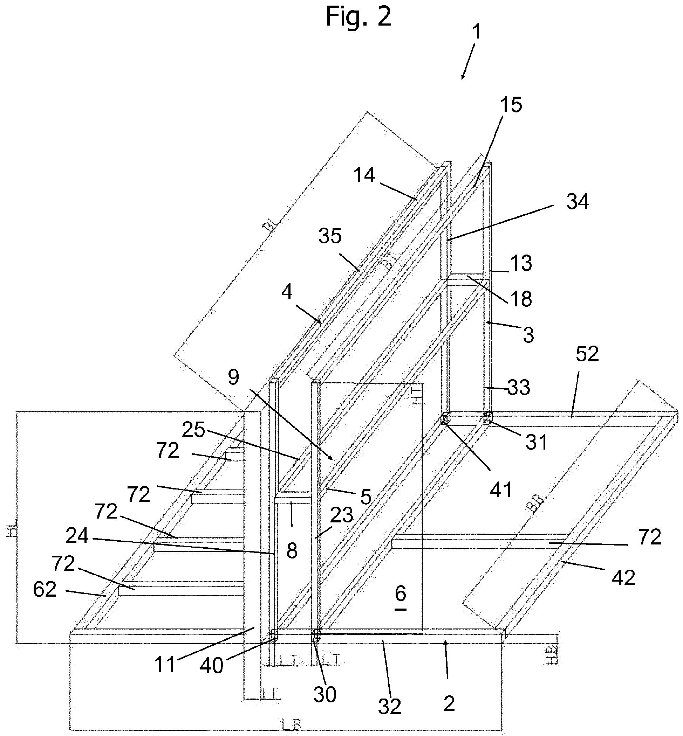

Das Basiselement 2 ist derart ausgebildet, dass es eine Bodenfläche 6 ausbildet oder einschliesst. Wenn das Basiselement als Plattenelement ausgebildet ist, bildet es die Bodenfläche 6 aus. Wenn das Basiselement als Rahmenkonstruktion ausgebildet ist, wie in Fig. 2 gezeigt, kann zusätzlich ein Plattenelement 22 auf diese Rahmenkonstruktion aufgelegt werden. Insbesondere kann das Plattenelement 22 eine Keilform haben, wobei die Höhe des Keils mit zunehmendem Abstand vom Trägerelement zunimmt. Ein derartiges Plattenelement ist in Fig. 1 nach der Art einer Explosionszeichnung im Abstand vom Basiselement 2 gezeigt, liegt aber im Betriebszustand auf dem Basiselement 2 auf. Wenn das Plattenelement 22 eine Keilform aufweist, wird der grossflächige plattenförmige Gegenstand, welcher die Last ausbildet, durch den Keil in einem Winkel zum Trägerelement 3, 4 angestellt. Hierdurch wird der plattenförmige Gegenstand gegen ein Kippen nach aussen, also weg von einem der Trägerelemente 3, 4 gesichert.

Die Trägerelemente 3, 4 sind gemäss dieses Ausführungsbeispiels in nicht montiertem Zustand gezeigt. Das heisst, die unteren Trägerelementenden 30, 31 des Trägerelements 3 sowie die unteren Trägerelementenden 40, 41 des Trägerelements 4 sind nicht in den als Ausnehmungen ausgeführten Teilelementen 16, 17, 26, 27 der Steckverbindung des Basiselements aufgenommen. Nach einem nicht dargestellten Ausführungsbeispiel können die Teilelemente der Steckverbindung des Basiselements als Vorsprünge ausgebildet sein, welche die Trägerelementenden aufnehmen.

Fig. 2 zeigt eine Variante des ersten Ausführungsbeispiels, in welchem der Zustand gezeigt ist, in welchem die Trägerelemente 3, 4 in der Steckverbindung aufgenommen sind.

Das Basiselement 2 kann gemäss Fig. 2 als eine Rahmenkonstruktion ausgeführt sein, die von mehreren Profilelementen 32, 42, 52, 62 gebildet wird. Zusätzlich kann die Rahmenkonstruktion durch ein Profilelement 72 versteift werden. Je nach den Gesamtabmessungen der zu lagernden oder transportierenden Lasten können eine Mehrzahl derartiger Profilelemente 72 vorgesehen sein, die sich zwischen je zwei gegenüberliegenden Profilelementen des Basiselements 2 erstrecken. Diese Rahmenkonstruktion 12 spannt eine Bodenfläche 6 auf. Nach einem weiteren zeichnerisch nicht dargestellten Ausführungsbeispiel kann das Basiselement 2 als ein Plattenelement ausgeführt sein.

Die Trägerelemente 3, 4 sind in Bezug auf das Lastelement 11 hintereinander angeordnet, was in Fig. 2 dargestellt ist. Das heisst, wenn man von dem Lastelement 11, das am zweiten Trägerelement 4 angelehnt ist, in Richtung des ersten Trägerelements 3 blickt, ist das erste Trägerelement 3 weiter entfernt von dem Lastelement als das zweite Trägerelement 4. Das heisst, nur eines der Trägerelemente 3 oder 4, hier das zweite Trägerelement, dient der Unterstützung des Lastelements, welches entlang einer Breitseite des zweiten Trägerelements 4 an das zweite Trägerelement 4 angelehnt wird. Bei dem Lastelement 11 handelt es sich um einen plattenförmigen Gegenstand, wie beispielsweise eine Wand. Derartige Wände können Längen von bis zu 25 m und Höhen von bis zu 5 m haben. Das erste Trägerelement 3 dient der Aufnahme eines Lastelements, welches entlang einer Breitseite des ersten Trägerelements 3 angelehnt wird, wobei die Breitseite die Seite des ersten Trägerelements 3 ist, die von dem zweiten Trägerelement 4 abgewandt ist. Ein derartiges, an das Trägerelement 3 angestelltes Lastelement ist in Fig. 2 nicht dargestellt.

Das Basiselement 2 weist eine Längsabmessung LB und eine Querabmessung BB auf, die wesentlich grösser als die Höhenabmessung HB des Basiselements 2 ist. Das Basiselement kann wie vorhin beschrieben aus mehreren Teilelementen, wie beispielsweise Profilelementen, zusammengesetzt sein. Das erste Trägerelement 3 und das zweite Trägerelement 4 weisen eine Längsabmessung LT, eine Querabmessung BT und eine Höhenabmessung HT auf. Die Längsabmessung LT jedes der Trägerelemente 3,4 ist wesentlich kleiner als die Längsabmessung LB des Basiselements 2. Somit können die beiden Trägerelemente 3,4 nebeneinander auf dem Basiselement 2 angeordnet werden. Das erste Trägerelement und das zweite Trägerelement können insbesondere parallel zueinander auf dem Basiselement 2 angeordnet sein. Die Querabmessung BT jedes Trägerelements entspricht vorteilhafterweise im Wesentlichen der Querabmessung BB des Basiselements.

Das erste Trägerelement 3 bildet mit einer ersten Teilfläche des Basiselements 2, welche eine Bodenfläche ausbildet, eine erste Auflagefläche für ein erstes Lastelement 11 aus. Das heisst, das Lastelement wird an der Auflagefläche des Trägerelements angelehnt oder an die Auflagefläche des Trägerelements angestellt und ruht mit der Schmalseite auf der Auflagefläche der Bodenfläche. Als Schmalseite wird die Auflagefläche bezeichnet, die durch die Dickenabmessung und entweder die Längsabmessung oder die Querabmessung des Lastelements gebildet wird. Das Lastelement ist insbesondere als ein Plattenelement ausgebildet. Die Längsabmessung des Lastelements wird mit LL, die Querabmessung des Lastelements mit BL und die Dickenabmessung oder Höhenabmessung des Lastelements HL bezeichnet. Ein derartiges Lastelement ist dadurch gekennzeichnet, dass die Längsabmessung LL sowie die Querabmessung BL wesentlich grösser als die Höhenabmessung HL ist.

Gemäss des Ausführungsbeispiels in Fig. 2 bildet das zweite Trägerelement 4 mit einer zweiten Teilfläche des die Bodenfläche ausbildenden Basiselements 2 eine zweite Auflagefläche für ein Lastelement 11 aus. Dieses Lastelement 11 ist vorteilhafterweise ein plattenförmiger Gegenstand, beispielsweise ein Plattenelement für eine Wand, ein Bodenelement, ein Deckenelement oder ein Dachelement mit einer Längsabmessung LL, einer Querabmessung BL und einer Höhenabmessung HL.

Daher kann sowohl die Auflagefläche linksseitig des ersten Trägerelements 3 (bezogen auf die Darstellung in Fig. 2) sowie rechtsseitig des zweiten Trägerelements 4 mit mindestens einem Lastelement 11 beladen werden. Selbstverständlich kann jedes der Lastelemente 11 aus mehreren Plattenelementen bestehen.

Insbesondere kann zumindest eine der Teilflächen des Trägerelements 3, 4 vertikal ausgerichtet sein. Das heisst, der Winkel zwischen dem Trägerelement und der Bodenfläche beträgt 90°. Hierdurch wird die Ladefläche optimal ausgenutzt und eine maximale Anzahl an Plattenelementen kann auf einer derartigen Lagervorrichtung gelagert und mit entsprechender Transportsicherung gesichert werden.

Die Lagervorrichtung kann gemeinsam mit dem Lastelement oder den Lastelementen auf ein Transportfahrzeug verladen werden. Sowohl beim Beladen, beim Entladen wie auch während des Transports kann es zum Kippen des Lastelements kommen, wenn es nicht gesichert ist. Hierzu wird ein Transportsicherungsmittel vorgesehen, welches insbesondere mit dem entsprechenden Trägerelement verbunden sein oder verbunden werden kann.

Bisher mussten die Lastelemente derart gesichert werden, dass eine Person mit einer Leiter entsprechende Transportsicherungsmittel anbringen musste. Wenn die Arbeitshöhe über 2 m beträgt, ist es erforderlich, dass die Person bei dieser Tätigkeit gesichert, das heisst, z.B. angeseilt ist. Die Personensicherung ist zeitraubend und verlängert den Be- und Entladevorgang, was zu erhöhten Kosten führt. Durch den Gang entfällt die Notwendigkeit der Personensicherung. Die Person, welche die Be- oder Entladung der Lagervorrichtung 1 vornimmt, begibt sich zur Sicherung oder Entsicherung der Ladung auf die Lauffläche 9 und bringt die entsprechenden Transportsicherungsmittel an oder löst sie beim Entladen. Die Lauffläche 9 ist seitlich mit einem Geländer 10 versehen, welches gleichzeitig als Auflage für ein Lastelement dienen kann. Durch das Geländer ist die Person gegen den Sturz aus grösserer Höhe gesichert. Hierdurch entfällt der Schritt des An- und Abseilens, sodass der Be- und Entladevorgang schneller abgewickelt werden kann.

Der Winkel zwischen dem Trägerelement 3, 4 und dem Basiselement 2 beträgt auf der Ladeseite mindestens 75°, vorzugsweise mindestens 90°. Hierbei wird vorausgesetzt, dass das Basiselement 2 eine im Wesentlichen horizontale Oberfläche aufweist. Ist das Basiselement als eine aus Profilelementen bestehende oder eine Profilelemente enthaltende Unterlage, wird als dessen Oberfläche die Bodenfläche angesehen, auf welcher das Lastelement ruht.

Als Ladeseite wird die Seite des Trägerelements bezeichnet, auf der sich im beladenen Zustand das Lastelement befindet. Je grösser der Winkel zwischen dem Trägerelement und dem Basiselement 2 ausgebildet ist, desto stabiler wird der Aufbau, welcher die Trägerelemente 3,4 und jedes der Verbindungselemente 5, 25 enthält.

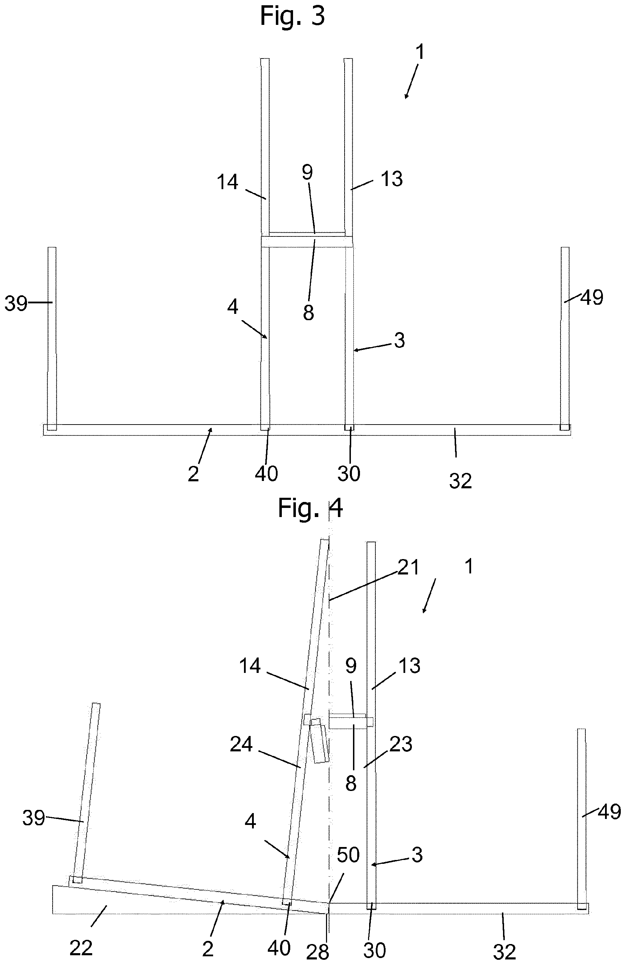

Fig. 3 zeigt eine Variante des Ausführungsbeispiels einer Lagervorrichtung gemäss Fig. 1 oder Fig. 2. Gleiche Teile werden wie in den vorhergehenden Ausführungsbeispielen mit gleichen Bezugszeichen versehen. Zur Sicherung des oder der Lastelemente werden Sicherungselemente 39, 49 vorgesehen. Diese Sicherungselemente 16, 26 werden am Basiselement 2 angebracht. Sie erstrecken sich in vorzugsweise vertikaler Richtung. Die Sicherungselemente 39, 49 können abnehmbar oder einklappbar sein, sodass sie beim Be- oder Entladen der Lagervorrichtung 1 nicht in den Weg kommen. Die Sicherungselemente können beispielsweise als Stangen ausgebildet sein, die in entsprechende Halterungen des Basiselements 2 aufgenommen werden können. Wenn das Basiselement 2, wie in Fig. 2 gezeigt, aus mehreren Profilelementen aufgebaut ist, können beispielsweise im Profilelement 32 Ausnehmungen vorgesehen sein, die analog der Ausnehmungen für die unteren Trägerelementenden 30, 40 der Trägerelemente 3, 4 ausgestaltet sein können.

Nach dem in Fig. 4 dargestellten Ausführungsbeispiel können das Basiselement 2 und die Trägerelemente 3, 4 zwei verschiedene Positionen, eine Transportposition sowie eine Be- oder Entladeposition, zueinander einnehmen. Die Trägerelemente 3,4 und das Basiselement 2 sind von der Be- und Entladeposition in die Transportposition schwenkbar. In Fig. 4 ist das linksseitige Trägerelement und der zugehörige linksseitige Teil des Basiselements 2 in einer gekippten Lage dargestellt, welche die Transportposition darstellt, das rechtsseitige Trägerelement 3 sowie der rechtsseitige Teil des Basiselements 2 in einer nicht gekippten Be- oder Entladeposition gezeigt. Hierfür ist zumindest ein Kippelement 28 vorgesehen, welches eine Kippbewegung der Trägerelemente 3,4 um eine horizontale Achse ermöglicht, die sich parallel zur Querabmessung BB des Basiselements bzw. zur Querabmessung BT der Trägerelemente erstreckt, siehe Fig. 2. Diese horizontale Achse verläuft in die Zeichnungsebene hinein durch einen Angelpunkt auf der Oberseite des Basiselements, der sich als Schnittpunkt mit der Symmetrieachse 21 ergibt. Das Kippen zumindest eines Teils des Basiselements 2 kann durch das am Basiselement im Bereich des Angelpunkts 50 angebrachte Kippelement 28 erfolgen, welches insbesondere als ein Scharnierelement ausgebildet ist. Auch kann ein keilförmiges Plattenelement 22 unter den kippbaren Teil des Basiselements geschoben werden, sodass das Basiselement sowie das Trägerelement 4 in der gekippten Lage gehalten werden, um das Lastelement zu stabilisieren. Der Winkel zwischen den Trägerelementen 3,4 und dem mitbewegten Teil des Basiselements 2 kann insbesondere beim Kippvorgang erhalten bleiben, sodass es zu keiner Verschiebung der Lastelemente kommen kann, wenn die Lagervorrichtung von der Transportposition in eine Be- oder Entladeposition geschwenkt wird oder umgekehrt. Die Scharnierelemente erlauben ein Kippen vom rechtsseitigen bzw. linksseitigen Teil des Basiselements um eine horizontale Achse, die parallel zur Querabmessung BB des Basiselements 2 durch den Angelpunkt 50 verläuft. Es kann für jede Seite des Basiselements je ein Kippelement vorgesehen sein, welches sich an einer Position zwischen dem Trägerelement und dem Sicherungselement, welches dem Trägerelement gegenüberliegt, befindet. Das Kippelement teilt die Längsabmessung LB des Basiselements in zwei Hälften, sodass zusammen mit der kippbaren Hälfte des Basiselements auch das in dieser Hälfte angeordnete Trägerelement eine Kippbewegung ausführt. Um eine derartige Kippbewegung zu ermöglichen, müssen der Zwischenboden 9 sowie die Stützelemente 8, 18 entfernt sein oder ebenfalls mit einem Kippelement ausgestattet sein. Jedes der Stützelemente 8, 18 kann zumindest einen Vorsprung aufweisen, der in eine korrespondierende Ausnehmung des Profilelements 23, 24 eingreift. Alternativ kann das Stützelement eine Ausnehmung aufweisen, in welcher sich ein korrespondierender Vorsprung erstreckt, der vom Profilelement gebildet wird.

Um zu vermeiden, dass ein großer Teil der Gewichtskraft der Lastelemente in der Transportposition in das Kippelement eingeleitet wird, wird je ein keilförmiges Plattenelement 22 vorgesehen, welches unter die hochgeschwenkten Teile des Basiselements 2 geschoben werden kann.

Es ist auch erforderlich, das Stützelement 8 zu entfernen, wenn das Trägerelement und das Basiselement in die Transportposition geschwenkt werden. Gemäss Fig. 4 ist das Stützelement 8 als separates Einzelteil gezeigt. Eine andere Möglichkeit besteht darin, das Stützelement mit einem Schwenkmechanismus auszustatten, oder die Verbindung zwischen einem der Trägerelemente und dem Stützelement 8 zu lösen. Alternativ dazu kann das Stützelement ein Klappelement enthalten, was zeichnerisch nicht dargestellt ist.

Gemäss einer der Fig. 3 oder Fig. 4 erstrecken sich die Trägerelemente 3,4 normal zur Zeichnungsebene und weisen eine Querabmessung BT auf, wie in Fig. 2 dargestellt ist. Das obere Ende jedes der Trägerelementabschnitte 13, 14 ist als ein Geländer ausgebildet. Wenn das erste Trägerelement 3 parallel zum zweiten Trägerelement 4 angeordnet ist, können die oberen Trägerelementabschnitte 13, 14 das Geländer ausbilden oder einzelne Pfostenelemente für das Geländer bilden. Vom Basiselement 2 bis zu der Lauffläche des Zwischenbodens 9 kann nach jedem der Ausführungsbeispiele mindestens eine Aufstiegshilfe angeordnet sein. Insbesondere kann die Aufstiegshilfe abnehmbar sein. Die Trägerelemente 3, 4 nach jedem der vorhergehenden Ausführungsbeispiele können aus mehreren Modulen bestehen.

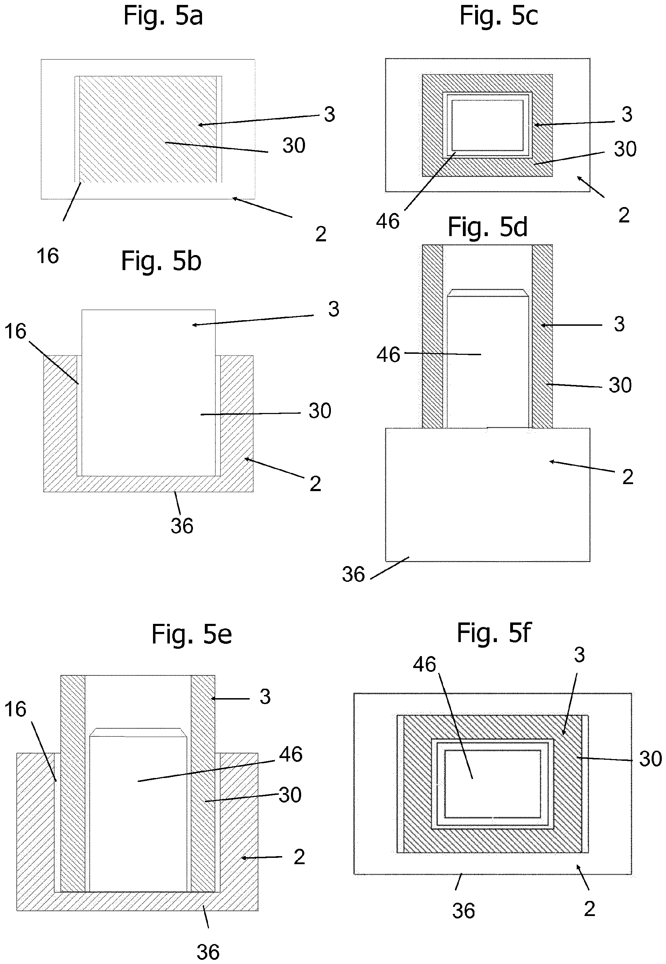

Fig. 5a zeigt eine Ansicht auf einen Ausschnitt des Basiselements 2 gemäss einer ersten Variante von oben. Das Basiselement 2 enthält eine Ausnehmung 16, in welcher sich das untere Trägerelementende 30 des Trägerelements 3 befindet. Fig. 5b zeigt einen Schnitt durch den in Fig. 5a dargestellten Ausschnitt des Basiselements 2. Das Basiselement 2 weist eine Unterseite 36 auf, die auf dem Boden aufliegt oder sich über nicht dargestellte Verstellelemente, die als Stützen ausgebildet sind, am Boden abstützt. Der Boden kann auch Teil der Ladefläche eines Transportfahrzeugs sein. Die Ausnehmung 16 ist als ein Sackloch ausgebildet, in welche das untere Trägerelementende 30 eingesteckt ist. Zwischen den Wänden des unteren Trägerelementendes 30 und den Innenwänden der Ausnehmung 16 kann ein Spalt bestehen bleiben, sodass das untere Trägerelementende 30 einfach in die Ausnehmung eingeschoben werden kann und jederzeit wieder aus der Ausnehmung entfernt werden kann.

Fig. 5c zeigt eine Ansicht auf einen Ausschnitt des Basiselements 2 gemäss einer zweiten Variante von oben. Das Basiselement 2 enthält einen Vorsprung 46, welcher vom unteren Trägerelementende 30 des Trägerelements 3 aufgenommen wird. Fig. 5d zeigt einen Schnitt durch den in Fig. 5c dargestellten Ausschnitt des Basiselements 2. Das Basiselement 2 weist eine Unterseite 36 auf, die auf dem Boden aufliegt oder sich über Verstellelemente am Boden abstützt. Der Boden kann auch Teil einer Ladefläche eines Transportfahrzeugs sein. Der Vorsprung 46 erstreckt sich als ein quaderförmiges Element in vertikaler Richtung. Das untere Trägerelementende 30 bildet ein Hohlprofil aus, welches einen Querschnitt aufweist, der dem Querschnitt des Vorsprungs 46 entspricht. Zwischen den Wänden des unteren Trägerelementendes 30 und den Aussenwänden des Vorsprungs 46 kann ein Spalt bestehen bleiben, sodass das untere Trägerelementende 30 einfach über den Vorsprung 46 gestülpt werden kann und jederzeit wieder vom Vorsprung abgenommen werden kann.

Fig. 5e und Fig. 5f zeigen eine mögliche Kombination der ersten und zweiten Variante gemäss Fig. 5a und 5b bzw. Fig. 5c und Fig. 5d.

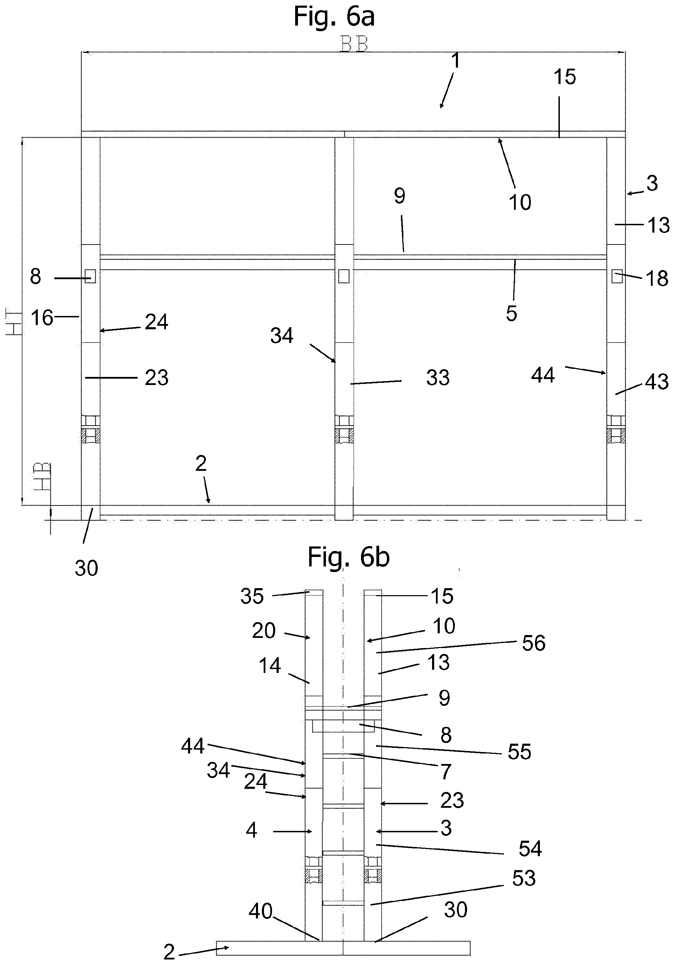

Fig. 6a zeigt eine Seitenansicht einer Lagervorrichtung gemäss einem vierten Ausführungsbeispiel. Fig. 6b zeigt eine Vorderansicht der Lagervorrichtung gemäss Fig. 6a. Fig. 6a zeigt das Trägerelement 3, die Verbindungselemente 5, 15, die Stützelemente 8, 18 sowie den auf den Verbindungselementen angeordnete Zwischenboden 9 und das Geländer 10. Die Ansicht zeigt somit ein Basiselement 2, welches aus drei Profilelementen besteht. Die Querabmessung des Basiselements ist wie in Fig. 2 mit BB bezeichnet. Die Trägerelemente 3 und die dahinterliegenden, in dieser Ansicht nicht sichtbaren Trägerelemente 4 sind in einem rechten Winkel zum Basiselement 2 angeordnet. Die Trägerelemente 3, 4 bestehen aus je drei mehrteiligen Profilelementen 23, 33, 43. Selbstverständlich können die Anzahl und/oder der Abstand der Profilelemente voneinander variabel sein. Es wäre auch denkbar, dass jedes der Trägerelemente 3,4 aus einem einzigen plattenförmigen Element besteht. Die Profilelemente sind durch die Verbindungselemente 5, 15 miteinander verbunden. In dieser Darstellung sind nur die Verbindungselemente 5, 15 des ersten Trägerelements 3 gezeigt, die dahinterliegenden Verbindungselemente 25, 35 (siehe Fig. 6b) sind hier verdeckt. Die Verbindungselemente 5, 15 liegen auf Stützelementen 8, 18 auf oder sind mit den Profilelementen verbunden. Die Stützelemente 8, 18 verbinden die benachbarten Trägerelemente 3, 4 im Wesentlichen auf der Höhe der Verbindungselemente 5, 15, was in Fig. 6b sichtbar ist. Auf den Stützelementen 8 kommen die Verbindungselemente 5, 25 zu liegen. Sie dienen als Auflage für den Zwischenboden 9. Der Zwischenboden 9 kann beispielsweise als ein Gitterrost ausgebildet sein oder auch eines oder mehrere Bretter umfassen. In Fig. 6b ist auch eine Aufstiegshilfe 7 sichtbar, welche den Zugang zum Zwischenboden ermöglicht. Die Aufstiegshilfe weist mehrere Sprossen auf. Zusätzlich kann ein Handlauf vorgesehen sein, der entlang zumindest eines der Trägerelemente verläuft. Der Handlauf ist zeichnerisch nicht dargestellt.

Zwischen den Profilelementen 23, 33, 43 des Trägerelements 3 und/oder den Profilelementen des Trägerelements 4 können zusätzliche Versteifungselemente vorgesehen sein. Die Versteifungselemente können parallel zu den Verbindungselementen oder Stützelementen verlaufen, ähnlich der Sprossen in Fig. 6b. Sie können auch kreuzweise zueinander angeordnet sein und die Form eines X ausbilden. Des Weiteren können Spannelemente zwischen den Profilelementen oder Verbindungselementen vorgesehen werden, um die Stabilität der Lagervorrichtung zu erhöhen. An deren oberen Enden werden die Profilelemente 23, 33, 43 jedes der Trägerelemente 3, 4 miteinander gemäss dieses Ausführungsbeispiels durch ein Geländer 10, 20 verbunden, welches ebenfalls ein Versteifungselement ausbilden kann.

Fig. 6a zeigt auch den Aufbau jedes der Profilelemente 23, 24, 33, 34, 43, 44 aus mehreren Teilprofilelementen. Das Profilelement 34 ist Bestandteil des Trägerelements 4 und ist in Fig. 6a hinter dem Profilelement 33 angeordnet und in Fig. 6b hinter dem Profilelement 24. Das Profilelement 44 ist Bestandteil des Trägerelements 4 und ist in Fig. 6a hinter dem Profilelement 43 angeordnet und in Fig. 6b hinter dem Profilelement 24. Der Aufbau des Profilelements 24 entspricht dem Aufbau des Profilelements 23, was in Fig. 6b gezeigt ist. In gleicher Weise entspricht der Aufbau des Profilelements 34, 44 dem Aufbau des entsprechenden Profilelements 33, 43. Die Positionen dieser Profilelemente sind in Fig. 6a, 6b angedeutet, obwohl sie durch davorliegende Profilelemente verdeckt sind und daher in den Ansichten der Fig. 6a sowie der Fig. 6b nicht sichtbar sind.

Am Beispiel des Profilelements 23 soll der Aufbau aus Teilprofilelementen erläutert werden. Das Profilelement 23 besteht im vorliegenden Ausführungsbeispiel aus vier Teilprofilelementen 53, 54, 55, 56. Das Teilprofilelement 53 ist mit dem unteren Trägerelementende 30 über die in Zusammenhang mit den vorhergehenden Ausführungsbeispielen beschriebene Steckverbindung mit dem Basiselement 2 verbunden. Das obere Ende des Teilprofilelements 53 ist in teilweise geschnittenem Zustand gezeigt. Es zeigt ein Hohlprofil mit einer zentralen Ausnehmung, in welcher ein Vorsprung eingreift, der sich am unteren Ende des Teilprofilelements 54 befindet. Das obere Ende des Teilprofilelements 53 sowie das untere Ende des Teilprofilelements 54 bilden somit die Teilelemente einer Steckverbindung aus. Die Steckverbindung kann durch Sicherungsmittel, beispielsweise Stifte gesichert sein, damit die Steckverbindung sich bei Einwirkungen von Zugkräften nicht lösen kann.

Das Teilprofilelement 53 kann sich von den anderen Teilprofilelementen durch das untere Trägerelementende unterscheiden. Das Teilprofilelement 55 enthält gemäss des vorliegenden Ausführungsbeispiels ein Aufnahmeelement für das Stützelement 8. Gegebenenfalls kann auch ein Aufnahmeelement für das Ende des Verbindungselements 5 vorgesehen sein, wenn das Verbindungselement 5 nicht auf dem Stützelement 8 aufliegt. Gegebenenfalls kann auch ein Aufnahmeelement für den Zwischenboden 9 vorgesehen sein. Zwischen dem Teilprofilelement 53 und dem Teilprofilelement 55 können kein weiteres Teilprofilelement, ein weiteres Teilprofilelement 54, wie in der vorliegenden Darstellung gezeigt, oder mehrere Teilprofilelemente angeordnet sein. Hierdurch kann die Höhe des Trägerelements 3 beliebig variiert werden.

Die Querabmessung BB kann ebenfalls durch den Einsatz von mehreren Profilelementen vergrössert werden oder durch Wegnahme beispielsweise des Profilelements 43 verringert werden. Insbesondere können die Verbindungselemente 5, 15, 25, 35 ebenfalls aus mehreren Verbindungsteilelementen bestehen, die je zwei benachbarte Profilelemente verbinden.

Somit ist eine Lagervorrichtung erhältlich, die einfach zusammenbaubar und abbaubar ist, sowie in ihrer Höhe und/oder Querabmessung veränderbar ist.

Gemäss einem zeichnerisch nicht dargestellten Ausführungsbeispiel kann das Basiselement auf Stützelementen gelagert werden. Diese Stützelemente können insbesondere in ihrer Höhe verstellbar sein. Damit entfällt die Notwendigkeit, das Basiselement auf eine Unterlage zu stellen, wenn das Transportfahrzeug eine grössere lichte Höhe benötigt oder wenn der Untergrund uneben ist. Hiermit wird der Beladevorgang oder Entladevorgang vom Transportfahrzeug vereinfacht, da keine Höhendifferenz zwischen der Ladefläche und der Position der Lastelemente besteht, wenn sie in einem Lagerraum zwischengelagert werden müssen. Das Stützelement kann ein Einschubelement aufweisen, welches in einem korrespondierenden Aufnahmeelement des Basiselements aufnehmbar ist.

Das Einschubelement kann beispielsweise als ein Stutzen ausgebildet sein, der in ein Hohlprofil eingeschoben werden kann. Die Profilelemente können zumindest an einem Ende als Aufnahmeelement ausgebildet sein, insbesondere ein Hohlprofil aufweisen. Das Aufnahmeelement kann auch als ein Rohrelement ausgebildet sein. Vorteilhafterweise weist das Aufnahmeelement einen Querschnitt auf, der passend zum Rohrelement ausgestaltet ist. Insbesondere kann das Rohrelement einen viereckigen Querschnitt haben. Alternativ dazu kann das Einschubelement selbst ein Hohlprofil aufweisen, in welches ein Ende des Profilelements des Basiselements 2 aufnehmbar ist.

Für den Fachmann ist offensichtlich, dass viele weitere Modifikationen zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nicht-ausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C... N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

## Patentansprüche

1. Lagervorrichtung (1) für grossflächige plattenförmige Gegenstände, insbesondere Wandelemente, umfassend ein Basiselement (2), ein Trägerelement (3, 4) wobei das Trägerelement ein erstes unteres Trägerelementende (30, 40) und ein zweites unteres Trägerelementende (31, 41) aufweist, wobei ein Zwischenboden (9) oberhalb des ersten und zweiten unteren Trägerelementendes angeordnet ist, wobei sich oberhalb des Zwischenbodens ein oberer Trägerelementabschnitt (13, 14) des Trägerelements (3, 4) erstreckt, wobei vom oberen Trägerelementabschnitt und dem Zwischenboden (9) ein begehbarer Gang ausgebildet ist, **dadurch gekennzeichnet, dass** zumindest eines der ersten und zweiten unteren Trägerelementenden (30, 31, 40, 41) als Teilelement einer Steckverbindung ausgebildet ist, welches als eine lösbare Verbindung mit dem Basiselement (3) verbindbar ist.

2. Lagervorrichtung (1) nach Anspruch 1, umfassend das Basiselement (2), ein erstes Trägerelement (3) und ein zweites Trägerelement (4), wobei das erste Trägerelement (3) ein erstes und zweites unteres Trägerelementende (30, 31) und das zweite Trägerelement (4) ein erstes und zweites unteres Trägerelementende (40, 41) aufweist, wobei das Basiselement ein Teilelement (16, 17, 26, 27) der Steckverbindung aufweist.

3. Vorrichtung nach Anspruch 1 oder 2, wobei das erste Trägerelement (3) ein erstes und ein zweites Profilelement (23, 33) enthält und ein Verbindungselement (5, 15), welches eine Verbindung zwischen dem ersten und zweiten Profilelement (23, 33) ausbildet und/oder gegebenenfalls das zweite Trägerelement (4) ein erstes und ein zweites Profilelement (24, 34) enthält und ein Verbindungselement (25, 35) welches eine Verbindung zwischen dem ersten und zweiten Profilelement (24, 34) ausbildet.

4. Vorrichtung nach einem der vorhergehenden Ansprüche, wobei das Verbindungselement (5, 25) als Auflager für den Zwischenboden (9) dient, wobei sich der Zwischenboden (9) zwischen Stützelementen (8, 18) erstreckt.

5. Vorrichtung nach einem der vorhergehenden Ansprüche 3 oder 4, wobei zumindest eines der Profilelemente (23, 33, 24, 34) höhenverstellbar ist.

6. Vorrichtung nach einem der vorhergehenden Ansprüche 3 bis 5, wobei zumindest eines der Verbindungselemente (5, 15, 25, 35) längsverstellbar ist.

7. Vorrichtung nach einem der vorhergehenden Ansprüche 3 bis 6, wobei zumindest eines der Verbindungselemente (5, 15, 25, 35) eine Mehrzahl von Verbindungsteilelementen enthält.

8. Vorrichtung nach einem der vorhergehenden Ansprüche 3 bis 7, wobei zumindest eines der Profilelemente (23, 24, 33, 34) eine Mehrzahl von Profilteilelementen enthält.

9. Vorrichtung nach einem der vorhergehenden Ansprüche, wobei die Steckverbindung ein Steckelement umfasst.

10. Vorrichtung nach einem der vorhergehenden Ansprüche, wobei das Basiselement ein Steckelement aufweist, welches in eine korrespondierende Ausnehmung zumindest eines der ersten und zweiten unteren Trägerelementendes (30, 31, 40, 41) einsteckbar oder auf das untere Trägerelementende (30, 31, 40, 41) aufsteckbar ist.

11. Vorrichtung nach einem der Ansprüche 9 oder 10, wobei das Steckelement zumindest eines der ersten und zweiten unteren Trägerelementenden (30, 31, 40, 41) enthält.

12. Vorrichtung nach einem der Ansprüche 9 bis 11, wobei das Steckelement in einer Ausnehmung (16, 17, 26, 27) oder einem Vorsprung des Basiselements (2) aufnehmbar ist.

13. Ein Verfahren zur Herstellung und/oder Zusammenbau und/oder Verwendung einer Lagervorrichtung (1) umfassend ein Basiselement (2), ein Trägerelement (3, 4) wobei das Trägerelement ein erstes unteres Trägerelementende (30, 40) und ein zweites unteres Trägerelementende (31, 41) aufweist, wobei ein Zwischenboden (9) oberhalb des ersten und zweiten unteren Trägerelementendes angeordnet ist, wobei sich oberhalb des Zwischenbodens ein oberer Trägerelementabschnitt (13, 14) des Trägerelements (3, 4) erstreckt, wobei vom oberen Trägerelementabschnitt und dem Zwischenboden (9) ein begehbarer Gang ausgebildet ist, wobei zumindest eines der ersten und zweiten unteren Trägerelementenden (30, 31, 40, 41) als Teilelement einer Steckverbindung ausgebildet ist, welches im zusammengesteckten Zustand eine lösbare Verbindung mit dem Basiselement (2) ausbildet,
umfassend zumindest einen der Schritte:
Zusammenbauen der Trägerelemente (3, 4) mit Stützelementen (8, 18), Positionieren der Trägerelemente (3, 4) auf dem Basiselement (2) und Einstecken von Steckelementen der Steckverbindung, wobei die Steckelemente von den Trägerelementen (3, 4) gebildet werden können, in die Ausnehmungen des Basiselements (2) oder Einstecken von Steckelementen, die durch das Basiselement (2) gebildet werden können, in die unteren Trägerelementenden (30, 31, 40, 41), die als Ausnehmung ausgebildet sein können oder eine Ausnehmung enthalten können.

14. Verfahren nach Anspruch 13, wobei ein Lastelement (11) mit einer Hebevorrichtung bereitgestellt wird, das Lastelement (11) auf der Lastseite des ersten Trägerelements (3) positioniert wird, ein weiteres Lastelement auf der Lastseite des zweiten Trägerelements (4) positioniert wird und jedes der Lastelemente (11) vom begehbaren Gang aus gesichert wird.

15. Verfahren nach Anspruch 14, wobei eines der Trägerelemente (3, 4) gegen das jeweils andere Trägerelement nach der Sicherung der Lastelemente (11) verschwenkt wird, wobei vor dem Beladen der Lagervorrichtung (1) ein Justieren der Höhe des Basiselements (2) mittels einem Verstellelement erfolgen kann.
